(19) Europäisches Patentamt
European Patent Office
Office européen des brevets

(11) **EP 1 980 578 A1**

(12) **EUROPEAN PATENT APPLICATION**
published in accordance with Art. 158(3) EPC

(43) Date of publication:
**15.10.2008 Bulletin 2008/42**

(21) Application number: **07707082.9**

(22) Date of filing: **19.01.2007**

(51) Int Cl.:
**C08F 255/02** (2006.01)       **C08F 8/46** (2006.01)
**C08F 110/06** (2006.01)      **C08L 51/06** (2006.01)
**C09D 5/00** (2006.01)           **C09D 151/06** (2006.01)

(86) International application number:
**PCT/JP2007/050794**

(87) International publication number:
**WO 2007/088737 (09.08.2007 Gazette 2007/32)**

(84) Designated Contracting States:
**DE FR GB**

(30) Priority: **03.02.2006 JP 2006027522**

(71) Applicants:
• **Nippon Paper Chemicals Co., Ltd.**
**Tokyo 1020076 (JP)**
• **Idemitsu Kosan Co., Ltd.**
**Chiyoda-ku**
**Tokyo 100-8321 (JP)**

(72) Inventors:
• **FUJINO, Kenichi**
**Iwakuni-shi**
**Yamaguchi 740-0003 (JP)**
• **MINAMI, Yutaka**
**Ichihara-shi**
**Chiba 299-0193 (JP)**

(74) Representative: **Vossius & Partner**
**Siebertstrasse 4**
**81675 München (DE)**

(54) **PROCESS FOR PRODUCING MODIFIED PROPYLENE POLYMER, MODIFIED PROPYLENE POLYMER OBTAINED BY THE PRODUCTION PROCESS, AND COMPOSITION CONTAINING THE MODIFIED PROPYLENE POLYMER**

(57)      Provided is a process for producing a modified propylene polymer which includes using a radical initiator and an organic acid to modify a propylene homopolymer satisfying the following (a) to (h): (a) mmmm is 40 to 50 mol%; (b) [rrrr/(1-mmmm)] ≤ 0.05; (c) rmrm is 2.5 mol% or more; (d) mm $\times$ rr/(mr)$^2$ ≤ 2.0; (e) Mw/Mn is 2.5 or lower; (f) Mw is 50,000 to 200,000; (g) [η] is 1.5 dL/g; and (h) Tm is 65 to 85°C. Also provided are: a modified propylene polymer obtained by the production process; and a composition, a surface treatment agent for a polyolefin resin, and a primer each containing the modified propylene polymer.

**EP 1 980 578 A1**

**Description**

TECHNICAL FIELD

The present invention relates to a process for producing a modified propylene polymer, a modified propylene polymer obtained by the production process, and a composition containing the modified propylene polymer.

More specifically, the present invention relates to a process for efficiently producing a modified propylene polymer useful as a coatingmaterial having high adhesive force, a primer for polyolefin, e. g. , modifier for obtaining a coating material improved in adhesion between the coating material and polyolefin or the like, a surface treatment agent for polyolefin, or the like, and a modified propylene polymer obtained by the production process.

Moreover, the present invention relates to a composition, a surface treatment agent for a polyolefin resin, and a primer each containing the modified propylene polymer.

BACKGROUND ART

Conventionally, resins obtained by chlorinating polyolefin have been industrially produced and used in various fields because the resins dissolve in an organic solvent and have excellent properties.

Various methods of chlorinating polyolefin are known.

The methods of chlorinating polyolefin are roughly classified into a method of chlorinating polyolefin as a suspension (e.g., Patent Document 1), a method of chlorinating polyolefin as a solution (e.g., Patent Document 2), and a method of chlorinating polyolefin bulk (e.g., Patent Document 3).

The method of chlorinating with a suspension is carried out by forming polyolefin into fine particles, suspending the particles in water, irradiating the resultant with ultraviolet rays or adding a radical generator to the resultant, and blowing chlorine gas thereinto. After completion of chlorination, the chlorinated polyolefin is separated from water, and dried.

According to the method of chlorinating with a solution, polyolefin is dissolved in a chlorine organic solvent inert to chlorine such as carbon tetrachloride, chloroform, methylene chloride, and trichloroethane, the resultant is irradiated with ultraviolet rays or a radical generator is added thereto, chlorine gas is blown thereinto for chlorination, and then, the solvent is separated from a product to thereby obtain chlorinated polyolefin.

Moreover, a method using a hydrocarbon solvent is also known (e.g., Patent Document 4).

According to the method of chlorinating with bulk, chlorination is effected by bringing powdered polyolefin into contact with chlorine gas by a fluid bed or the like.

A chlorinated polyolefin containing chlorine in a high proportion is used as an anticorrosive coating material for outdoor buildings due to excellent weather resistance. In contrast, chlorinated polyolefin containing chlorine in a low proportion is used for ink for a polyolefin film, a primer for coating a polyolefin molded article, etc., because such chlorinated polyolefin adheres to polyolefin.

However, the chlorinated polyolefin produces harmful substances when recycled or incinerated, and thus poses many problems.

Moreover, the adhesion, adhesiveness, and adhesive properties to polyolefin are also insufficient when the chlorinated polyolefin is baked into the polyolefin at a low temperature.

In recent years, in order ta deal with the above-described problems, a technique using a modified olefin polymer obtained by graft-modifying polyolefin as resin containing no halogen such as chlorine for a material of a coating material or the like has been proposed.

For example, a modifier containing no chlorine has been proposed, which is useful as a sealant having high adhesive properties, and is useful for, for example, providing polyolefin improved in the compatibility with an inorganic filler or the like, because the modifier can impart physical properties such as high adhesive properties, high strength, and softness to polyolefin and the like (e.g., Patent Document 5). However, Patent Document 5 does not refer to performance such as solvent resistance and water resistance required for a coating material, primer, surface modifier, etc.

Moreover, a graft-modified polypropylene polymer is disclosed, which does not contain halogen, is excellent in solubility, and can give excellent adhesive properties and coating properties to a crystalline propylene polymer substrate (e.g., Patent Document 6). However, the solvent resistance and low-temperature baking coating properties are not sufficiently improved.

Various methods of graft-modifying polyolefin are known (e. g. , Patent Documents 5 and 6). For example, a solution method which involves dissolving polyolefin in an organic solvent, and adding a radical initiator and a monomer while heating and stirring for reaction and a melting method which involves thermally melting polyolefin in a reactor such as an extruder and kneader, and adding a radical initiator and a monomer while kneading for reaction are known.

However, it is also generally known that the above-described reaction methods have advantages and disadvantages.

In the case of the solution method, a uniform reaction can be carried out, and a molecular weight lowering reaction of polyolefin referred to as β cleavage is hard to occur. Thus, the solution method is suitable for obtaining a modified polyolefin excellent in various physical properties.

However, since usable solvents are limited, or steps such as solvent substitution, solidification, and solvent recovery are required, the solution method is disadvantageous in terms of an apparatus and economics.

In contrast, although the melting method is advantageous in terms of an apparatus and economics, the reaction is likely to become non-uniform and molecular weight lowering by β cleavage is inevitable when a prior-art technique is used. Thus, the physical properties of a modified polyolefin to be obtained by the melting method are inferior to those of a modified polyolefin to be obtained by the solution method.

As a method of improving the disadvantages of the melting method, a technique of improving the graft ratio of a monomer or suppressing molecular weight lowering by the combined use of reaction auxiliaries such as styrene and dicyclopentadiene (e.g., Patent Document 7) and a technique using long-chain alkyl ester of acrylic acid in combination with a monomer (e.g., Patent Document 8) are proposed.

However, in the case where graft modification is performed using a conventional polyolefin as a raw material by the melting method, even when these techniques are employed, the physical properties of a modified polyolefin to be obtained by the melting method are inferior to those of a modified polyolefin to be obtained by the solution method.

Moreover, with increase in environmental concerns, transition from a solvent-based modified polyolefin to a water-based modified polyolefin has been strongly desired also in the field of a modified polyolefin, and an aqueous conversion technique of a modified polyolefin containing no halogen is disclosed (e. g., Patent Document 9).

Various aqueous conversion processes of a modified polyolefin are also proposed, and a process using a solid article or melt of a modified polyolefin is advantageous because steps of distilling off and recovering the solvent are not required.

Therefore, a technique for obtaining a modified polyolefin having excellent performance by the melting method is required also in the field of a water-based modified polyolefin similarly as in the above.

Further, in recent years, for the purpose of saving energy, reducing cost, and suppressing thermal deformation of a substrate, a modified polyolefin which can be baked at a low temperature is required particularly in the field of a coating material.

Under low-temperature baking conditions, a modified polyolefin obtained by a conventional melting method cannot be imparted with sufficient adhesiveness, solvent resistance, water resistance, etc.

Patent Document 1: JP 36-4745 A
Patent Document 2: JP 48-8856 A
Patent Document 3: JP 46-737 A
Patent Document 4: JP 3-197510 A
Patent Document 5: WO 03/087172 A
Patent Document 6: JP 2003-201322 A
Patent Document 7: JP 3615103 B
Patent Document 8: JP 2002-173514 A
Patent Document 9: JP 2769958 B

DISCLOSURE OF THE INVENTION

Under the above-described circumstances, the present invention aims to provide a process for producing, by melt graft modification, a modified propylene polymer which is excellent in adhesion, adhesiveness, adhesive properties, solvent resistance, water resistance, coating properties, etc., even under low-temperature baking conditions and which serves as a raw material for a coating composition, surface modifier, primer, etc. ; amodified propylene polymer obtained by the production process; and a composition, surface treatment agent for polyolefin resin, and primer each containing the modified propylene polymer.

The inventors of the present invention have conducted extensive researches in order to develop a modifiedpropylene polymer having the above-mentioned preferable properties. As a result, the inventors of the present invention have found that the object can be achieved by subjecting a propylene homopolymer having specific properties to a specific modification using a radical initiator and a specific organic acid.

The present invention has been accomplished based on these findings.

That is, the present invention provides:

1. A process for producing a modified propylene polymer, including subjecting a propylene homopolymer satisfying the following (a) to (h) to the following modification (2) using a radical initiator and the following organic acid (1):

(a) a meso pentad fraction [mmmm] is 40 to 50 mol%,
(b) a racemic pentad fraction [rrrr] and [1-mmmm] satisfy a relationship represented by the following formula:

$$[rrrr]/[1-mmmm] \leqq 0.05,$$

(c) a racemic meso racemic meso pentad fraction [rmrm] is 2.5 mol% or more,
(d) a meso triad fraction [mm], a racemic triad fraction [rr], and a triad fraction [mr] satisfy a relationship represented by the following formula:

$$mm \times rr/(mr)^2 \leqq 2.0,$$

(e) a molecular weight distribution (Mw/Mn) measured by gel permeation chromatography (GPC) is 2.5 or lower,
(f) a weight average molecular weight (Mw) measured by GPC is 50,000 to 200,000,
(g) in a tetralin solvent, an intrinsic viscosity [$\eta$] measured at 135°C is 0.5 to 2.0 dL/g, and
(h) a peak top [Meltingpoint (Tm)] at the highest temperature measured, by a differential scanning calorimeter (DSC), from a melting endothermic curve obtained by holding a sample at 220°C for 3 minutes under a nitrogen atmosphere, rapidly cooling to 25°C, holding the resultant at 25°C for 50 minutes, and then increasing a temperature at a rate of 10°C/minute is 65 to 85°C, wherein

(1) an organic acid is a mixture of an unsaturated carboxylic acid and/or its derivative (1-1) and a (meth) acrylic-acid compound (1-2) containing, in a proportion of 20 mass% or more, at least one compound selected from (meth) acrylates represented by General Formula (1):

$$CH_2 = CR_1COOR_2 \qquad (1)$$

where $R_1$ represents H or $CH_3$; $R_2$ represents $C_nH_{2n+1}$; and n represents an integer of 8 to 18, and a mass ratio of (1-1) to (1-2) is 1:20 to 20:1, and
(2) the modification is performed by adding a radical initiator and the organic acid to the propylene homopolymer which is melt by heating, and performing graft modification at 100 to 250°C;

2. A modified propylene polymer satisfying the following (1) to (3) obtained by the production process according to the above item 1:

(i) a meso pentad fraction [mmmm] of a propylene chain portion is 40 to 50 mol%, and a meso triad fraction [mm], a racemic triad fraction [rr], and a triad fraction [mr] satisfy a relationship represented by the following formula:

$$mm \times rr/(mr)^2 \leqq 2.0,$$

(j) a molecular weight distribution (Mw/Mn) measured by gel permeation chromatography (GPC) is 2.5 or lower, and a weight average molecular weight (Mw) measured by gel permeation chromatography (GPC) is 50,000 to 100,000, and
(k) apeaktop [Melting point (Tm)] at the highest temperature measured, by a differential scanning calorimeter (DSC), from a melting endothermic curve obtained by holding a sample at 220°C for 3 minutes under a nitrogen atmosphere, rapidly cooling to 25°C, holding the resultant at 25°C for 50 minutes, and then increasing the temperature at a rate of 10°C/minute is 65 to 85°C;

3. A modified polyolefin polymer composition including the modified propylene polymer according to the above item 2 and an organic solvent;
4. A modified polyolefin polymer composition including the modified propylene polymer according to the above item 2 and water;
5. A surface treatment agent for polyolefin resin including the modified propylene polymer according to the above item 2; and
6. A primer including the modified propylene polymer according to the above item 2.

According to the present invention, a modified propylene polymer obtained by modifying a propylene homopolymer having specific properties through a melt graft reaction using a radical initiator and a specific organic acid can give high adhesive properties, high strength, softness, etc., to a coating material and the like even under low-temperature baking conditions, and can give adhesion, adhesiveness, adhesive properties, solvent resistance, water resistance, coating properties, etc., even when no chlorine is contained. Thus, such a modified propylene polymer is useful as a raw material for a coating material, primer, ink, and the like.

Moreover, the modified propylene polymer can be effectively used either in a solvent-based form or a water-based form.

BEST MODE FOR CARRYING OUT THE INVENTION

In the process for producing a modifiedpropylene polymer of the present invention, a propylene homopolymer is used as a raw material polymer to be modified.

The propylene homopolymer used in the present invention satisfies the following requirements (a) to (h):

(a) a meso pentad fraction [mmmm] is 40 to 50 mol%,
(b) a racemic pentad fraction [rrrr] and [1-mmmm] satisfy a relationship represented by the following formula:

$$[\mathrm{rrrr}]/[1-\mathrm{mmmm}] \leq 0.05,$$

(c) a racemic meso racemic meso pentad fraction [rmrm] is 2.5 mol% or more,
(d) a meso triad fraction [mm], a racemic triad fraction [rr], and a triad fraction [mr] satisfy a relationship represented by the following formula:

$$\mathrm{mm} \times \mathrm{rr}/(\mathrm{mr})^2 \leq 2.0,$$

(e) a molecular weight distribution (Mw/Mn) measured by gel permeation chromatography (GPC) is 2.5 or lower,
(f) a weight average molecular weight (Mw) measured by GPC is 50,000 to 200,000,
(g) in a tetralin solvent, an intrinsic viscosity [η] measured at 135°C is 0.5 to 2.0 dL/g, and
(h) a peak top [Melting point (Tm)] at the highest temperature measured, by a differential scanning calorimeter (DSC), from a melting endothermic curve obtained by holding a sample at 220°C for 3 minutes under a nitrogen atmosphere, rapidly cooling to 25°C, holding the resultant at 25°C for 50 minutes, and then increasing a temperature at a rate of 10°C/minute is 65 to 85°C.

When the propylene homopolymer used in the present invention satisfies the above-described requirements, the polymer is subjected to a specific modification using a radical initiator and an organic acid, whereby a modified propylene polymer can be obtained, which is excellent in adhesion, adhesiveness, adhesive properties, solvent resistance, water resistance, and coating properties and which is useful as a raw material for a coating composition, surface treatment agent for polyolefin resin, primer, and coating material modifier.

In the propylene homopolymer used in the present invention, when a meso pentad fraction [mmmm] (a) becomes large, stereoregularity becomes high.

The meso pentad fraction [mmmm] (a) of the propylene homopolymer used in the present invention is 40 to 50 mol%. When the value of the meso pentad fraction [mmmm] (a) is lower than 40 mol%, the solvent resistance sometimes decreases. When the value of the meso pentad fraction [mmmm] (a) exceeds 50 mol%, the melting point increases, deteriorating cold working properties, which makes low-temperature baking difficult.

Moreover, the value of [rrrr]/-mmmm] (b) is calculated from the fraction in pentad units and is an index showing the uniformity of the regularity distribution of a propylene homopolymer.

When the value increases, the regularity distribution is broadened to give a mixture of a high-stereoregular polypropylene and an atactic polypropylene as in the case of a conventional polypropylene produced using an existing titanium/magnesium catalyst. Then, adhesion decreases, and solvent resistance and water resistance decrease.

The [rrrr] / [1-mmmm] (b) of the propylene homopolymer used in the present invention is 0.05 or lower, preferably 0.04 or lower, and more preferably 0.035 or lower.

The value of the [rrrr] / [1-mmmm] (b) exceeds 0.05, the adhesion sometimes decreases.

Further, the racemic meso racemic meso fraction [rmrm] (c) of the propylene homopolymer used in the present invention is 2.5 mol% or more, preferably 2.6 mol% or more, and more preferably 2. 7 mol% or more.

When the value of the racemic meso racemic meso fraction [rmrm] (c) is 2.5 mol% or more, the randomness of the stereoregularity of a polymer increases, and the balance between cold working properties and adhesion is improved. Moreover, when the value of the racemic meso racemic meso fraction [rmrm] (c) is lower than 2.5 mol%, the cold working properties sometimes decrease.

In the propylene homopolymer used in the present invention, $mm \times rr/(mr)^2$ (d) is an index showing the randomness of the stereoregularity of a polymer. When the $mm \times rr/(mr)^2$ (d) is closer to 0.25, the randomness increases, low-temperature coating can be performed, and the balance among adhesion, adhesiveness, and adhesive properties is excellent. The $mm \times rr/(mr)^2$ (d) of the propylene homopolymer used in the present invention is 2.0 or lower, preferably 1.8 or lower, and more preferably 1.5 or lower.

When the value of the $mm \times rr/(mr)^2$ (d) exceeds 2.0, the regularity distribution is broadened to form a stereo block structure in which a chain portion having high regularity and a chain portion having low regularity coexist, resulting in reduction in adhesion and sometimes resulting in reduction in solvent resistance and water resistance.

Moreover, it is preferable for the propylene homopolymer used in the present invention to satisfy the following requirements as described above:

(a') a meso pentad fraction [mmmm] is 40 to 50 mol%,
(b') a racemic pentad fraction [rrrr] and [1-mmmm] satisfy a relationship represented by the following formula:

$$[\mathtt{rrrr}]/[\mathtt{1\text{-}mmmm}] \leq 0.04,$$

(c') a racemic meso racemic meso pentad fraction [rmrm] is 2.6 mol% or more,
(d') a meso triad fraction [mm], a racemic triad fraction [rr], and a meso racemic fraction [mr] satisfy a relationship represented by the following formula:

$$\mathtt{mm \times rr/(mr)}^2 \leq 1.8.$$

Further, it is particularly preferable for the propylene homopolymer used in the present invention to satisfy the following requirements:

(a") a meso pentad fraction [mmmm] is 40 to 50 mol%,
(b") a racemic pentad fraction [rrrr] and [1-mmmm] satisfy a relationship represented by the following formula:

$$[\mathtt{rrrr}]/[\mathtt{1\text{-}mmmm}] \leq 0.035,$$

(c") a racemic meso racemic meso pentad fraction [rmrm] is 2.7 mol% or more,
(d") a meso triad fraction [mm], a racemic triad fraction [rr], and a meso racemic fraction [mr] satisfy a relationship represented by the following formula:

$$\mathtt{mm \times rr/(mr)}^2 \leq 1.5.$$

The meso pentad fraction [mmmm], racemic pentad fraction [rrrr], and racemic meso racemic meso pentad fraction [rmrm] refer to a meso pentad fraction, racemic pentad fraction, and racemic meso racemic meso fraction in pentad units in a polypropylene molecular chain as measured using methyl signals in $^{13}$C-NMR spectra according to the method proposed by A. Zambelli et al., in "Macromolecules, 6,925 (1973)".

Measurement of the $^{13}$C-NMR spectra is performed using the following apparatus under the following conditions according to the attribution of peak proposed by A. Zambelli et al., in "Macromolecules, 8,687 (1975)".

Apparatus: JNM-EX400 Model $^{13}$C-NMR apparatus, manufactured by JEOL Ltd.
Method: proton complete decoupling method
Concentration: 220 mg/milliliter
Solvent: 90:10 (volume ratio) mixed solvent of 1,2,4-trichlorobenzene and heavy benzene

Temperature: 130°C
Pulse width: 45°
Pulse repetition period: 4 seconds
Integration: 10,000 times

<Formula>

$$M = m/S \times 100$$

$$R = \gamma/S \times 100$$

$$S = P\beta\beta + P\alpha\beta + P\alpha\gamma$$

S: signal intensity of side chain methyl carbon atom in all propylene units
$P\beta\beta$: 19.8 to 22.5 ppm
$P\alpha\beta$: 18.0 to 17.5 ppm
$P\alpha\gamma$: 17.5 to 17.1 ppm
$\gamma$: Racemic pentad chain: 20.7 to 20.3 ppm
m: Meso pentad chain: 21.7 to 22.5 ppm

The propylene homopolymer used in the present invention also satisfies the following requirements (e) to (h).

(e) The molecular weight distribution (Mw/Mn) measured by GPC is 2.5 or lower, preferably 2.2 or lower, and more preferably 2.0 or lower.
When Mw/Mn exceeds 2.5, the solvent resistance sometimes decreases.
(f) The weight average molecular weight measured by GPC is 50,000 to 200,000, preferably 70,000 to 200,000, and more preferably 80,000 to 200,000.
When the weight average molecular weight is lower than 50,000, the solvent resistance, water resistance, adhesion, adhesiveness, and adhesive properties decrease. When the weight average molecular weight exceeds 200,000, there is a possibility that low-temperature baking properties and coating properties may decrease.
(g) In a tetralin solvent, the intrinsic viscosity [η] measured at 135°C is 0.5 to 1.5 dL/g, preferably 0.5 to 1.0 dL/g, and more preferably 0.6 to 0.8 dL/g.
When the intrinsic viscosity [η] is lower than 0.5 dL/g, the solvent resistance, water resistance, adhesion, adhesiveness, and adhesive properties sometimes decrease.
(h) The peak top [Melting point (Tm)] at the highest temperature, measured, by a differential scanning calorimeter (DSC), from the melting endothermic curve obtained by holding a sample at 220°C for 3 minutes under a nitrogen atmosphere, rapidly cooling to 25°C, holding the resultant at 25°C for 50 minutes, and then increasing the temperature at a rate of 10°C/minute is 65 to 85°C.
When the peak top is lower than 65°C, the adhesion sometimes decreases. When the peak top exceeds 85°C, there is a possibility that cold working properties may decrease.

The molecular weight distribution (Mw/Mn) is a value calculated from the weight average molecular weight (Mw) and the number average molecular weight (Mn) expressed in terms of polypropylene and measured by gel permeation chromatography (GPC) using the following apparatus under the following conditions.

<GPC Measuring Apparatus>
Column: TOSO GMHHR-H(S)HT
Detector: RI detector WATERS 150C for liquid chromatogram
Measuring Conditions
Solvent: 1,2,4-trichlorobenzene
Measuring temperature: 145°C
Flow velocity: 1.0 milliliter/minute
Sample concentration: 2.2 mg/milliliter
Injected amount: 160 micro liters
Calibration curve: Universal Calibration

Analytical program: HT-GPC (Ver. 1.0)
The above melting point (Tm) is determined by a DSC measurement.

That is, the peak top [Melting point (Tm)] at the highest temperature is measured, by a differential scanning calorimeter (DSC), from the melting endothermic curve obtained by holding a sample at 220°C for 3 minutes under a nitrogen atmosphere, rapidly cooling to 25°C, holding the resultant at 25°C for 50 minutes, and then increasing the temperature at a rate of 10°C/minute.

By the way, in general, at the time of polymerization of propylene, the polymerization of propylene usually proceeds by a so-called 1,2-insertion in which the carbon atom located on the methylene side of a propylene monomer is bonded to the active site of a catalyst, and propylene monomers are sequentially coordinated in the same manner to cause polymerization. However, 2, 1-insertion or 1,3-insertion (also referred to as abnormal insertion) rarely occurs.

In the propylene homopolymer used in the present invention, it is preferable that the 2,1-insertion or 1,3-insertion be minimized.

Further, it is preferable for the ratio of these insertions to satisfy the relationship represented by Formula (1):

$$[(m-2,1) + (r-2,1) + (1,3)] \leq 1.0(\%) \qquad (1)$$

where (m-2,1) is a content(%) of meso 2,1-insertion as measured by $^{13}$C-NMR; (r-2,1) is a content(%) of racemic 2,1-insertion as measured by $^{13}$C-NMR; and (1,3) is a content(%) of 1,3-insertion as measured by $^{13}$C-NMR. Further, it is more preferable for the ratio of these insertions to satisfy the relationship represented by Formula (2):

$$[(m-2,1) + (r-2,1) + (1,3)] \leq 0.5(\%) \qquad (2).$$

In particular, it is most preferable for the ratio of these insertions to satisfy the relationship represented by Formula (3):

$$[(m-2,1) + (r-2,1) + (1,3)] \leq 0(\%) \qquad (3)$$

When not satisfying the relationship represented by Formula (1), crystallinity is deteriorated more than expected, sometimes resulting in reduction in adhesion, adhesiveness, and adhesive properties.

It should be noted that (m-2, 1), (r-2, 1) and (1, 3) are insertion contents calculated from integral intensities of respective peaks of $^{13}$C-NMR spectra by determining the attribution of the peaks of $^{13}$C-NMR spectra according to the method reported by Grassi et al., "Macromolecules, 21, p. 617 (1988)" and Busico et al., "Macromolecules, 27, p. 7538 (1994)". More specifically, (m-2,1) is a meso-2,1-insertion content (%) calculated from a ratio of the integral intensity of the Pα, γthreo peak appearing at around 17.2 ppm to the integral intensity in a whole methyl carbon region.

(r-2,1) is a racemic 2,1-insertion content (%) calculated from a ratio of the integral intensity of the Pα, γthreo peak appearing at around 15. 0 ppm to the integral intensity in a whole methyl carbon region.

(1,3) is a 1,3-insertion content(%) calculated from a ratio of the integral intensity of the Tβ, γ+ peak appearing at around 31.0 ppm to the integral intensity of a whole methine carbon region.

Further, it is more preferable that the propylene homopolymer used in the present invention show substantially no peak attributable to a molecular chain end (n-butyl group) derived from the 2,1-insertion in the measurement of the $^{13}$C-NMR spectra.

With respect to the molecular chain end derived from the 2,1-insertion, the respective insertion contents are calculated from the integral intensities of the respective peaks by determining the attribution of the $^{13}$C-NMR spectra according to the method reported by Jungling et al., "J. Polym. Sci.: Part A: Polym. Chem., 33, p. 1305 (1995)".

In the case of isotactic polypropylene, the peak appearing at around 18.9 ppm is assigned to the end methyl carbon of an n-butyl group.

$^{13}$C-NMR measurement relating to the abnormal insertion or the molecular chain end measurement may be performed using the above-mentioned apparatus under the above-mentioned conditions.

The propylene homopolymer used in the present invention which is to be modified can be produced by homopolymerizing propylene using a metallocene catalyst.

In the present invention, among the metallocene catalysts, a metallocene catalyst is preferable, which uses a transition metal compound in which a ligand forms a crosslinking structure via a crosslinking group. In particular, a method of homopolymerizing propylene using a metallocene catalyst obtained by combining a transition metal compound in which a crosslinking structure is formed via two crosslinking groups and a promoter is more preferable.

In the production process of the modified propylene polymer of the present invention, the above-mentioned propylene homopolymer is subjected to a specific modification using a radical initiator and a specific organic acid.

As the specific organic acid used for the modification, a mixture of an unsaturated carboxylic acid and/or its derivatives, and a (meth)acrylic-acid compound can be used.

The unsaturated carboxylic acid refers to an unsaturated hydrocarbon having a carboxylic group, and anhydrides are included in the derivatives.

Preferable examples of the unsaturated carboxylic acid and the derivatives thereof which are used in the present invention include: fumaric acid, maleic acid, itaconic acid, citraconic acid, aconitic acid, and anhydrides thereof; methyl fumarate; ethyl fumarate; propyl fumarate; butyl fumarate; dimethyl fumarate; diethyl fumarate; dipropyl fumarate; dibutyl fumarate; methyl maleate; ethyl maleate; propryl maleate; butyl maleate; dimethyl maleate; diethyl maleate; dipropyl maleate; and dibutyl maleate, and more preferable examples include itaconic acid anhydride and maleic acid anhydride.

The (meth) acrylic-acid compound is a compound containing at least one (meth)acryloyl group in its molecule.

Examples of the (meth)acrylic-acid compound include (meth)acrylic acid, methyl (meth)acrylate, ethyl (meth)acrylate, n-butyl (meth)acrylate, cyclohexyl (meth)acrylate, hydroxyethyl (meth)acrylate, isobornyl (meth)acrylate, glycidyl (meth)acrylate, octyl (meth)acrylate, lauryl (meth)acrylate, tridecyl (meth)acrylate, stearyl (meth)acrylate, and acrylamide.

The above-mentioned substances can be used singly or as a mixture. The mixing ratio can be freely determined. However, at least one compound selected from (meth)acrylates represented by General Formula (I) needs to be contained in the (meth)acrylic-acid compound in a proportion of 20 mass% or more.

When the above-described conditions are satisfied, molecular weight lowering is effectively suppressed, and very uniform modification is possible. Thus, adhesiveness, solvent resistance, moisture resistance, solvent solubility, and compatibility with other resins can be further improved.

$$CH_2=CR_1COOR_2 \qquad (I)$$

where $R_1$ represents H or $CH_3$; $R_2$ represents $C_nH_{2n+1}$; and n represents an integer of 8 to 18.

The present invention has a feature of using a mixture in which an unsaturated carboxylic acid and/or its derivative(s) and a (meth)acrylic-acid compound are mixed in a mass ratio of 1:20 to 20:1.

In the case where the use amount of the unsaturated carboxylic acid and/or its derivative(s) is lower than the above-mentioned mass ratio of 1:20, adhesiveness with a top coat decreases when the mixture is used as a coating material. Moreover, when the mixture is used as a water-based composition, the dispersion stability is poor.

In the case where the use amount of the (meth)acrylic-acid compound is lower than the above-mentioned mass ratio of 20:1, adhesiveness, solvent resistance, moisture resistance, solvent solubility, and compatibility with other resins are poor.

The radical initiator is not limited, and can be suitably selected from conventionally-known radical initiators such as various organic peroxides; azo compounds such as azobisisobutyronitrile and azobisisovaleronitrile; etc. Of those, organic peroxides are preferable. Examples of the organic peroxides include: diacyl peroxides such as dibenzoyl peroxide, di-3,5,5-trimethylhexanoyl peroxide, dilauroyl peroxide, didecanoyl peroxide, and di(2,4-dichlorobenzoyl) peroxide; hydroperoxides such as t-butyl hydroperoxide, cumene hydroperoxide, diisopropylbenzene hydroperoxide, and 2,5-dimethylhexane-2,5-dihydroperoxide; dialkyl peroxides such as di-t-butyl peroxide, dicumyl peroxide, 2,5-dimethyl-2,5-di(t-butylperoxy)hexane, 2,5-dimethyl-2,5-di(t-butylperoxy)hexene-3, and $\alpha,\alpha'$-bis(t-butylperoxy)diisopropylbenzene; peroxyketals such as 1,1-bis-t-butylperoxy-3,3,5-trimethylcyclohexane and 2,2-bis(t-butylperoxy)butane; alkyl peresters such as t-butyl peroxyoctoate, t-butyl peroxypivalate, t-butyl peroxyneodecanoate, and t-butyl peroxybenzoate; and peroxycarbonates such as di-2-ethylhexylperoxydicarbonate, diisopropyl peroxydicarbonate, di-sec-butyl peroxydicarbonate, and t-butyl peroxyisopropylcarbonate.

Of those, dialkyl peroxides are preferable.

Further, one kind thereof may be used alone, or two or more kinds may be used in combination.

Specific examples of commercially available products of the organic peroxides include Perhexyne 25B, Perbutyl D, Perbutyl C, Perhexa 25B, Percumyl D, Perbutyl P, Perbutyl H, Perhexyl H, Percumyl H, Perocta H, Percumyl P, Permenta H, Perbutyl SM, Permec N, Peromer AC, Perhexa V, Perhexa 22, Pernexa CD, Pertetra A, Perhexa C, Perhexa 3M, Perhexa HC, Perhexa TMH, Perbutyl IF, Perbutyl Z, Perbutyl A, Perhexyl Z, Perhexa 25Z, Perbutyl E, Perbutyl L, Perhexa 25MT, Perbutyl I, Perbutyl 355, Perbutyl MA, Perhexyl I, Perbutyl IB, Perbutyl O, Perhexyl O, Percylo O, Perhexa 250, Perocta O, Perbutyl PV, Perhexyl PV, Perbutyl ND, Perhexyl ND, Percylo ND, Peraota ND, Percumyl ND, Diper ND, Peroyl SOP, Peroyl OPP, Peroyl MBP, Peroyl EEP, Peroyl IPP, Peroyl NPP, Peroyl TCP, Peroyl IB, Peroyl SA, Peroyl S, Peroyl O, Peroyl L, Peroyl 355, Nyper BW, Nyper BMT, and Nyper CS, those of which are manufactured by NOF CORPORATION.

The use amounts of the organic acid and the radical initiator are not limited, and are suitably determined according to desired physical properties of the target modified propylene polymer. The use amount of the organic acid is generally in the range of 0.1 to 100 parts by mass, and preferably 1 to 50 parts by mass based on 100 parts by mass of a propylene homopolymer to be used.

When the use amount thereof is lower than 0.1 part by mass, adhesiveness, solvent solubility, compatibility with other resins, etc., decrease. When the use amount thereof is more than 100 parts by mass, adhesiveness, solvent resistance, etc., decrease.

The radical initiator is generally used in the range of 0.01 to 20 parts by mass, and preferably 0.1 to 10 parts by mass. Even when the use amount thereof is larger or smaller than the above-mentioned range, the graft ratio decreases, and when the use amount is larger than the above-mentioned range, it is not economical.

A method of modifying a propylene homopolymer used in the present invention includes a melting method which involves adding the above-mentioned compound to a molten propylene homopolymer using a Banbury mixer, kneader, extruder, etc.

The compounds may be added successively or at once.

Moreover, in order to improve the graft efficiency of an unsaturated carboxylic acid derivative and/or its anhydride according to the intended use, styrene o-, p-, $\alpha$-methyl styrene, divynylbenzene, hexadiene, dicyclopentadiene, etc., can also be added as a reaction auxiliary.

The conditions of performing graft modification reaction such as a temperature and time are suitably determined according to a raw material to be used, apparatus to be used, intended use, etc. It is preferable that the reaction temperature be 100 to 250°C.

When the above-mentioned specific propylene homopolymer is subjected to graft reaction using a specific organic acid and by a specific modification method, excellent performance, which is comparable to that obtained in a solution reaction, can be obtained even in a molten reaction.

When the reaction temperature is lower than 100°C, the reaction becomes non-uniform. When the reaction temperature is higher than 250°C, the molecular weight decreases and the molecular weight distribution is broadened.

The modified propylene polymer of the present invention is obtained by the above-mentioned production process, and has the following features (i) to (k):

(i) In a propylene chain portion, the meso pentad fraction [mmmm] is 40 to 50 mol%, and the meso triad fraction [mm], racemic triad fraction [rr], and triad fraction [mr] satisfy the relationship represented by the following formula:

$$mm \times rr/(mr)^2 \leq 2.0.$$

When the value of the meso pentad fraction [mmmm] of a modified propylene polymer is lower than 40 mol%, the solvent resistance sometimes decreases. When the value exceeds 55 mol%, the melting point increases, lowering cold working properties.

(j) The molecular weight distribution (Mw/Mn) measured by gel permeation chromatography (GPC) is 2.5 or lower, and the weight average molecular weight measured by gel permeation chromatography (GPC) is 50,000 to 100,000.

The weight average molecular weight of the modified propylene polymer of the present invention is preferably 50,000 to 100,000, and more preferably 50,000 to 80,000.

When the weight average molecular weight thereof is lower than 50,000, the adhesiveness, cohesion, solvent resistance, moisture resistance, etc., decrease.

When the weight average molecular weight thereof is larger than 100,000, the solvent solubility, spray suitability, and compatibility with other resins decrease, or operability becomes poor when a modified propylene polymer is subjected to an aqueous conversion process.

Moreover, when the molecular weight distribution (Mw/Mn) is larger than 2.5, the adhesiveness, cohesion, solvent resistance, moisture resistance, etc., decrease because of a component with a low molecular weight, and the solvent solubility, compatibility with other resins, etc. decrease because of a component with a large molecular weight.

The weight average molecular weight of the modified propylene polymer of the present invention can be measured by GPC.

(k) The peak top [Meltingpoint (Tm)] at the highest temperature measured, by a differential scanning calorimeter (DSC), from the melting endothermic curve obtained by holding a sample at 220°C for 3 minutes under a nitrogen atmosphere, rapidly cooling to 25°C, holding the resultant at 25°C for 50 minutes, and then increasing the temperature at a rate of 10°C/minute is 65 to 85°C.

The melting point can be adjusted by the types and amounts of an organic acid to be used and a radical initiator to be used, reaction conditions, etc., and is preferably in the range of 65 to 85 °C.

When the melting point is lower than 65°C, the solvent resistance, heat resistance, etc., decrease.

Moreover, according to the intended use, stickiness of a dry film becomes problematic.

When the melting point is higher than 85°C, the adhesiveness at the time of low-temperature baking decreases, and, in accordance therewith, other physical properties such as solvent resistance and water resistance also decrease.

The modified propylene polymer of the present invention can function as an intermediate media for substrates such as polypropylene and polyethylene which are poor in adhesiveness and adhesive properties, and to which a coating material or the like is difficult to be applied or adhered.

For example, the modified propylene polymer of the present invention is laminated, by a hot melt method, to the surface of a substrate containing polyolefin resin, and a coating material is further applied thereon, whereby the adhesive stability and the like of the coating material can be increased.

Moreover, the modified propylene polymer of the present invention is also useful for adhering polyolefin resins having poor adhesive properties.

More specifically, the modified propylene polymer of the present invention can be suitably used as an adhesive, primer, surface treatment agent, binder for a coating material, binder for ink, etc.

As an adherend (substrate) to which the modified propylene polymer of the present invention can be suitably applied, sheets, film-formed articles, etc., made of a nonpolar substrate such as polypropylene, polyethylene, and ethylene-propylene copolymer are mentioned.

The modified propylene polymer of the present invention has a feature that the modified propylene polymer can be used even when the substrate is hard to adhere because the surface thereof is not subjected to a surface treatment by plasma, corona, etc. The modified propylene polymer of the present invention also can be similarly used even for a substrate which is subjected to surface treatment.

As another aspect, a modified propylene polymer composition is provided, the composition being obtained by dissolving or dispersing a modified propylene polymer in a solvent.

First, an aspect in which an organic solvent is used as a solvent will be described.

Mentioned as the organic solvent are aromatic solvents such as toluene and xylene; alicyclic solvents such as cyclohexane, methylcyclohexane, and ethylcyclohexane; aliphatic solvents such as nonane and decane; ester solvents such as ethyl acetate and butyl acetate; ketone solvents such as acetone, methyl ethyl ketone, and methyl butyl ketone; alcohol solvents such as methanol, ethanol, propanol, and butanol; or mixtures of the above-mentioned solvents.

It is preferable to use a mixture of the alicyclic solvents and ester solvents or a mixture of the alicyclic solvents and ketone solvents from the viewpoint of solution stability or environmental issues.

A modified propylene polymer composition obtained by using the organic solvents is excellent in adhesiveness and the like, and thus, can be used as an adhesive for a nonpolar substrate, primer, binder resin for a coating material, binder resin for ink, and surface treatment agent.

Moreover, according to the necessity such as intended use, the modified propylene polymer composition may be changed into other forms such as a solution, powder, and sheet for use.

In such a case, an additive such as an antioxidant, light stabilizer, UV absorber, pigment, dye, and inorganic filler can be added as required.

In the use as an adhesive or binder for ink, not only nonpolar substrates such as polyethylene and polypropylene but also polar substrates such as polyester, polyurethane, and polyamide are used in many cases. Since the modified propylene polymer of the present invention also adheres to such polar substrates, the polymer may be also suitably used in this use.

Similarly, the modified propylene polymer composition is suitably used as a primer or a binder for a coating material because the composition is excellent in adhesiveness to a top coating material or a clear coating material.

The modified propylene polymer of the present invention has excellent compatibility with other resins.

When the polymer is used as a binder for a coating material or ink, other resins such as a urethane resin, epoxy resin, acrylic resin, phenol resin, alkyd resin, polyamide resin, polyimide resin, silicone resin, and cellulose nitrate may be blended as required.

Moreover, a modified propylene polymer composition (water-based polymer composition) containing the above-described modified propylene polymer of the present invention and water is provided.

In the present invention, a surfactant can be used for dispersing and emulsifying the modified propylene polymer of the present invention in water.

As the surfactant, any of nonionic surfactants and anionic surfactants may be used. Nonionic surfactants are preferable because the nonionic surfactants have a better effect on the water resistance of the emulsified water-based polymer composition.

Examples of the nonionic surfactants include polyoxyethylene alkyl ether, polyoxyethylene alkylene alkyl ether, polyoxyethylene derivatives, polyoxyethylene fatty acid ester, polyoxyethylene polyhydric alcohol fatty acid ester, polyoxyethylene propylene polyol, polyoxyethylene sorbitan fatty acid ester, polyoxyethylene cured caster oil, polyoxyalkylene

EP 1 980 578 A1

polycyclic phenyl ether, polyoxyethylene alkylamine, alkylalcanolamide, and polyalkylene glycol (meth)acrylate. Preferable examples include polyoxyethylene alkyl ether, polyoxyethylene fatty acid ester, polyoxyethylene sorbitan fatty acid ester, and polyoxyethylene alkylamine.

Examples of the anionic surfactant include alkyl sulfate, polyoxyethylene alkyl ether sulfate, alkylbenzene sulfonate, alpha olefin sulfonate, methyl taurinate, sulfosuccinate, ether sulfonate, ether carboxylate, fatty acid salt, naphthalene sulfonate formalin condensate, alkyl amine salt, quarternary ammonium salt, alkyl betaine, and alkyl amine oxide, and preferable examples include polyoxyethylene alkyl sulfate and sulfosuccinate.

Moreover, a substance which is generally referred to as a high molecular weight surfactant and which has a relatively high molecular weight and emulsification ability can also be used as a surface active component.

For example, commercially available articles such as DISCOALL N-509 and DISCOALL N-518 (manufactured by Daiichi Kogyo Seiyaku CO., Ltd.); HOMOGENOL L-18, HOMOGENOL L-1820, HOMOGENOL L-95, and HOMOGENOL L-100 (manufactured by Kao Corp.); POLITY A-530, POLITY A-540, and POLITY A-550 can be used.

The addition amount of the surfactant is in the range of 0.1 to 30% by weight, more preferably in the range of 5 to 20% by weight relative to the water-based polymer composition.

When the addition amount thereof is larger than 30% by weight, an emulsifier exceeding the amount that is enough to form the water-based polymer composition exists in the system. Thus, the adhesive force is sharply reduced, and, when formed into a dry coating film, the plasticizing effect and bleed phenomenon occurs, and then blocking is likely to occur.

The water-based polymer composition of the present invention has a pH of preferably 5 or higher, and particularly preferably 6 to 10.

When the pH is lower than 5, neutralization is insufficient. Thus, the modified propylene polymer is not dispersed in water or liable to cause precipitation and separation even if the polymer is dispersed, to impair the storage stability. Therefore, such a pH is not preferable.

When the pH is 10 or higher, problems with compatibility with other components and safety in working arise.

A basic substance may be added in order to neutralize an acid component in the water-based polymer composition to allow dispersion in water.

Preferable examples of the basic substance include sodium hydroxide, potassium hydroxide, ammonia, methylamine, propylamine, hexylamine, octylamine, ethanolamine, propanolamine, diethanolamine, N-methyldiethanolamine, dimethylamine, diethylamine, triethylamine, N,N-dimethylethanolamine, 2-dimethylamino-2-methyl-1-propanol, 2-amino-2-methyl-1-propanol, and morpholine, and more preferable examples include ammonia, triethylamine, 2-amino-2-methyl-1-propanol, and morpholine.

The use amount thereof may be suitably determined depending on the amount of acid component of the water-based polymer composition. However, the basic substance should be added in such a manner that the pH of the water-based polymer composition is 5 or higher, and preferably 6 to 10.

In the water-based polymer composition of the present invention, the average particle diameter of the modified propylene polymer emulsified and dispersed in water is preferably 500 nm or smaller, more preferably 300 nm or smaller, and still more preferably 200 or smaller.

When the average particle diameter thereof is 500 nm or more, the storage stability and compatibility with other resins of the water-based polymer composition deteriorate, and physical properties of a film such as adhesiveness to a substrate, solvent resistance, water resistance, and blocking resistance are also impaired.

The average particle diameter is preferably adjusted to 50 nm or more.

The particle diameter can be made as small as possible. However, in such a case, the addition amount of emulsifying agent generally increases, and physical properties of a film such as adhesiveness to a substrate, water resistance, and gasohol resistance tend to deteriorate.

Average particle diameter values are determined by measurement of particle diameter distribution using a light scattering method.

Particle diameters may be controlled by means of the addition amount and type of an emulsifying agent, by stirring power in emulsifying the resin in water, etc.

The water-based polymer composition may be emulsified in any known methods such as a compulsory emulsifying method, phase conversion emulsifying method, D-phase emulsifying method, and gel emulsifying method. Single stirring using either one of a stirring blade, disper, homogenizer and the like, composite stirring using more than one of the above, sand mill, multi-screw extruder, etc., can be used for the above methods.

However, in order to adjust the average particle diameter of the water-based polymer composition to 500 nm or smaller, the phase-conversion emulsifying method, or methods using composite stirring having a high shearing power, sand mill, and multi-screw extruder, and the like are preferable.

Moreover, a cross linking agent may be used in the water-based polymer composition depending on the intended use or purpose.

The term "crosslinking agent" refers to a compound that reacts with an active hydrogen such as a hydroxyl group, carboxyl group, and amino group contained in the modified propylene polymer, surfactant, basic substance, etc., to form a crosslinking structure. The crosslinking agent itself may be water soluble or may be dispersed in water in some way. Specific examples thereof include blocked isocyanate compounds, aliphatic or aromatic epoxy compounds, amine compounds, and amino resins.

The crosslinking agent may be added in any methods without limitation.

For example, the crosslinking agent may be added in the course of aqueous conversion process or after aqueous conversion process.

In addition, the aqueous polymer composition of the present invention may be compounded with, according to the intended use thereof, an aqueous acrylic resin, an aqueous urethane resin, lower alcohols, lower ketones, lower esters, a wettability improving agent, an antifoaming agent, an antiseptic agent, a leveling agent, a viscosity modifier, an antioxidant, a light stabilizer, a UV light absorber, a dye, a pigment, metal salts, and acids.

EXAMPLES

Next, the present invention will be described in more detail with reference to Examples and Comparative Examples, but is not limited thereto.

Production Example 1 (Propylene homopolymer)

(1) Synthesis of a complex

Synthesis of (1,2'-dimethylsilylene)(2,1'-dimethylsilylene)-bis(3-trimethyl silylmethylindenyl) zirconium dichloride

3.0 g (6.97 mmol) of lithium salt of (1,2'-dimethylsilylene)(2,1'-dimethylsilylene)-bis(indene) were dissolved in 50 mL of tetrahydrofuran (THF) in a Schlenk bottle, and the solution was cooled to -78°C.

2.1 mL (14.2 mmol) of iodomethyl trimethylsilane were slowly added dropwise, and the mixture was stirred at room temperature for 12 hours.

The solvent was distilled off, 50 mL of ether were added, and the resultant was washed with a saturated ammonium chloride solution.

After liquid separation, the organic phase was dried, and the solvent was removed to thereby obtain 3.04 g (5.88 mmol) of (1,2'-dimethylsilylene)(2,1'-dimethylsilylene)-bis(3-trimethyl silylmethylindene) (84% of yield).

Subsequently, 3.04 g (5.88 mmol) of (1,2'-dimethylsilylene)(2,1'-dimethylsilylene)-bis(3-trimethyl silylmethylindene) obtained above and 50 mL of ether were put in a Schlenk bottle under a nitrogen stream.

After the mixture was cooled to -78°C, 7.6 mL (11.7 mmol) of n-BuLi (1.54M hexane solution) were added, and the resultant was stirred at room temperature for 12 hours.

The solvent was distilled off, and the obtained solidwas washed with 40 mL of hexane to thereby obtain 3.06 g (5.07 mmol) of lithium salt as an ether adduct (73% of yield).

The results of $^1$H-NMR(90MHz, THF-$d_8$) measurement were as follows: $\delta$0.04 (s, 18H, trimethylsilyl), 0.48 (s, 12H, dimethylsilylene), 1.10 (t, 6H, methyl), 2.59 (s, 4H, methylene), 3.38 (q, 4H, methylene), 6.2-7.7 (m, 8H, Ar-H).

The lithium salt obtained above was dissolved in 50 mL of toluene under a nitrogen stream.

The solution was cooled to -78°C, and a toluene (20 mL) suspension of 1.2 g (5.1 mmol) of zirconium tetrachloride which had been cooled to -78°C beforehand was added dropwise thereto.

After adding dropwise, the resultant was stirred at room temperature for 6 hours. Then, the solvent of the reaction solution was distilled off.

The obtained residue was recrystallized from dichloromethane to thereby obtain 0.9 g (1.33 mmol) of (1,2'-dimethylsilylene)(2,1'-dimethylsilylene)-bis(3-trimethyl silylmethylindenyl) zirconium dichloride (26% of yield).

The results of $^1$H-NMR (90 MHz, CDCl$_3$) measurement were as follows: $\delta$0.0 (s, 18H, trimethylsilyl), 1.02, 1.12 (s, 12H, dimethylsilylene), 2.51 (dd, 4H, methylene), 7.1-7.6 (m, 8H, Ar-H).

(2) Polymerization of propylene

To an autoclave made of stainless steel equipped with a stirrer and having an internal volume of 10 L were successively loaded 4 L of n-heptane, 2 mmol of triisobutylaluminum, 2 mmol methyl aluminoxane (manufactured by ALBEMARLE Corp.), and 2 $\mu$mol of (1,2'-dimethylsilylene)(2,1'-dimethylsilylene)-bis(3-trimethyl silylmethylindenyl) zirconium dichloride obtained in (1) above.

Subsequently, 0.08 MPaG of hydrogen was introduced, and then propylene gas was introduced so as to reach 0.8 MPaG with the total pressure while the temperature was being increased to 60°C.

During polymerization, propylene was successively supplied in such a manner that the total pressure reached 0.8 MPaG.

Polymerization was performed at a polymerization temperature of 60°C for 30 minutes, and the contents were taken out, followed by drying under reduced pressure to thereby obtain the target propylene homopolymer.
The physical properties of the obtained propylene homopolymer are shown in Table 1.

Production Example 2

The procedure of Production Example 1 was performed except that the hydrogen introduction amount was adjusted to the level at which the target molecular weight was successfully achieved.

Production Example 3

The procedure of Production Example 1 was performed except that the hydrogen introduction amount and 1-butene introduction amount were adjusted to the respective levels at which the target molecular weight and 1-butene content were successfully achieved. Production Example 4
The procedure of Production Example 1 was performed except that (1,2'-dimethylsilylene)(2,1'-dimethylsilylene)-(3-trimethylsil ylmethylindenyl) (indenyl) zirconium dichloride synthesized in the same manner as in Production Example 1 was used, and the hydrogen introduction amount was adjusted to the level at which the target molecular weight was successfully achieved.
[Table 1]

Table 1

| | | Production Example 1 | Production Example 2 | Production Example 3 | Production Example 4 |
|---|---|---|---|---|---|
| (mmmm)fraction | mol% | 45 | 43 | - | 57 |
| (rmrm)fraction | mol% | 2.6 | 3.0 | - | 1.6 |
| (rrrr)fraction | mol% | | | - | 2.0 |
| (rrrr) / (1-mmmm) | | 0.04 | 0.04 | - | 0.05 |
| $mm \times rr/(mr)^2$ | | 1.3 | 1.2 | - | 2.2 |
| Abnormal insertion amount | mol% | 0 | 0 | - | 0.3 |
| 1,3 insertion faction | mol% | | | | 0 |
| 2,1 insertion fraction | mol% | | | | 0.3 |
| Mw | | 150,000 | 32,000 | 72,000 | 68,000 |
| Mw/Mn | | 2.0 | 2.0 | 2.0 | 2.0 |
| Intrinsic viscosity [η] | dl/g | 1.1 | 0.32 | 0.63 | 0.55 |
| Tm | °C | 72 | 70 | Unmeasurable[*)] | 94 |
| 1-butene content | mol% | - | - | 3 | - |

*) The peak top [Melting point (Tm)] at the highest temperature measured from the melting endothermic curve obtained by allowing a sample to stand at room temperature for 24 hours, and then increasing the temperature at a rate of 10°C/minute was 50°C.

Example 1 (Production of MAH·acrylic modified article)

100 parts by mass of the propylene homopolymer obtained in Production Example 1, 8 parts by mass of maleic anhydride, 1 part by mass of methyl methacrylate, 2 parts by mass of cyclohexyl methacrylate, 1 part by mass of methacrylic acid, 4 parts by mass of lauryl methacrylate, and 4 parts by mass of Perhexa 25B (manufactured by Nippon Oil & Fats Co., Ltd.) were mixed. Thereafter, the mixture was supplied at 15 kg/h to a twin screw extruder (L/D = 60, φ = 40 mm, and the number of barrels = 14). The residence time was adjusted to 10 minutes, the barrel temperatures (the 3rd to 9th barrels) of a reaction part were adjusted to 170 to 180°C, and degassing was performed in the 11th barrel.

The remaining unreacted material was removed to thereby obtain an MAH·acrylic modified propylene homopolymer. The physical properties of the obtained MAH·acrylic modified propylene homopolymer are shown in Table 2.

Comparative Example 1 (Production of MAH·acrylic modified article)

An MAH·acrylic modified propylene homopolymer was obtained following the procedure of Example 1 except that the propylene homopolymer of Example 1 was replaced by the propylene polymer obtained in Production Example 2. The physical properties of the obtained MAH·acrylic modified propylene homopolymer are shown in Table 2.

Comparative Example 2 (Production of MAH·acrylic modified article)

An MAH·acrylic modified propylene copolymer was obtained following the procedure of Example 1 except that the propylene homopolymer of Example 1 was replaced by the propylene copolymer obtained in Production Example 3. The physical properties of the obtained MAH·acrylic modified propylene copolymer are shown in Table 2.

Comparative Example 3 (Production of MAH·acrylic modified article)

An MAH·acrylic modified propylene homopolymer was obtained following the procedure of Example 1 except that the propylene homopolymer of Example 1 was replaced by the propylene homopolymer obtained in Production Example 4.
The physical properties of the obtained MAH·acrylic modified propylene homopolymer are shown in Table 2.

[Table 2]

Table 2

| | | Example 1 | Comparative Example 1 | Comparative Example 2 | Comparative Example 3 |
|---|---|---|---|---|---|
| (mmmm)fraction | mol % | 45 | 43 | - | 57 |
| mm $\times$ rr/(mr)$^2$ | | 1.3 | 1.2 | - | 2.2 |
| Mw | | 70,000 | 24,000 | 58,000 | 51,000 |
| Mw/Mn | | 2.0 | 2.0 | 2.0 | 2.0 |
| Tm | °C | 75 | 70 | Unmeasurable[*)] | 95 |

*) The peak top [Melting point (Tm)] at the highest temperature measured from the melting endothermic curve obtained by allowing a sample to stand at room temperature for 24 hours, and then increasing the temperature at a rate of 10°C/minute, was 50°C.

[Primer test (solvent-based sample)]

10 mass% toluene solutions of each of the MAH·acrylic modified polymers produced in Example 1 and Comparative Examples 1 to 3 were prepared.
The toluene solution was spray-applied (dry film thickness of 10 to 15 $\mu$m) to an ultrahigh-rigid polypropylene plate whose surface was wiped with isopropyl alcohol, and dried at room temperature for 10 minutes.
To the resultant, a polyurethane top coat (1K base, 2K clear) was spray-applied (dry film thickness: base; about 15 to 20 $\mu$m, clear; 20 to 30 $\mu$m). The resultant was baked at 80°C for 35 minutes.
The baked sample was left to stand for 3 days, and then subj ected to a cross-cut adhesion test, solvent resistance test, and moisture resistance test.

(Test method)

(1) Cross-cut adhesion test

The surface of a coated film was cut with a cutter to reach a base, and 100 squares were formed at intervals of 1 mm. Then, a cellophane adhesive tape was adhered thereto, and stripped off 5 times in the 180° direction. Then, the number of remaining squares was counted.

(2) Solvent resistance test

Each side of a coated sample piece was cut with a cutter at an angle of 45°, and then the sample was immersed in a mixed solvent in which regular gasoline and ethanol were mixed at a mixing ratio of 9:1 at room temperature for 1 hour. Then, time until abnormalities appear was measured.

(3) Moisture resistance test

The sample was left to stand at 50°C at a humidity of 98%RH for 5 days. Then, the existence of the abnormalities on the surface of the coated film was observed, and the cross-cut adhesion test was also performed.
The obtained results are shown in Table 3.
[Table 3]

Table 3

| Test Example | MAH·acrylic modified article | Cross-cut adhesion test (/100) | Solvent resistance (minute) | Moisture resistance (/ 100) |
|---|---|---|---|---|
| 1 | Example 1 | 100 | No abnormalities | 100 No abnormalities |
| 2 | Comparative Example 1 | 85 | 20 | 63 Blister |
| 3 | Comparative Example 2 | 100 | 10 | 100 No abnormalities |
| 4 | Comparative Example 3 | 100 | No abnormalities | 100 No abnormalities |

[Primer test (water-based sample)]

In a 2 L four-neck flask equipped with a stirrer, condenser, thermometer, and dropping funnel, 200 g of each of the MAH·acrylic modified polymers obtained in Example 1 and Comparative Examples 1 to 3, 33 g of surfactant (ETHOMEEN T/25, manufactured by Lion Corporation), and 36 g of methylcyclohexane were fed, and the mixture was kneaded at 120°C for 30 minutes.
Next, 8 g of 2-amino-2-methyl-1-propanol was added over 5 minutes, and then, the resultant was held for 5 minutes. Thereafter, 970 g of 90°C hot water was added over 40 minutes.
The pressure was reduced, and methylcyclohexane was removed. The resultant was cooled to room temperature under stirring, and further diluted with water to thereby obtain a water-based dispersion having a solid content of 30%.
The water-based dispersion was spray-applied (dry film thickness of 10 to 15 $\mu$m) to an ultrahigh-rigid polypropylene plate whose surface was wiped with isopropyl alcohol, and dried at 80°C for 10 minutes.
To the resultant, a polyurethane top coat (1K base, 2K clear) was spray-applied (dry film thickness: base; about 15 to 20 $\mu$m, clear; 20 to 30 $\mu$m). The resultant was baked at 80°C for 35 minutes.
The baked sample was left to stand for 3 days, and then subj ected to a cross-cut adhesion test, solvent resistance test, and moisture resistance test in the same manner as in the solvent-based sample.
The obtained results are shown in Table 4.
[Table 4]

Table 4

| Test Example | MAH·acrylic modified article | Cross-cut adhesion test (/100) | Solvent resistance (minute) | Moisture resistance (/ 100) |
|---|---|---|---|---|
| 1 | Example 1 | 100 | No abnormalities | 100 No abnormalities |
| 2 | Comparative Example 1 | 65 | 10 | 40 Blister |
| 3 | Comparative Example 2 | 100 | 5 | 100 Blister |
| 4 | Comparative Example 3 | 95 | 10 | 0 Blister |

INDUSTRIAL APPLICABILITY

The modified propylene polymer of the present invention can impart high adhesive properties, high strength, softness, etc., to a coating material and the like. Irrespective of the absence of chlorine, the modified propylene polymer of the present invention can impart adhesion, adhesiveness, adhesive properties, solvent resistance, water resistance, coating properties, etc. , to a coating material and the like. Thus, the modified propylene polymer of the present invention is useful as a raw material for a coating material, primer, etc.

**Claims**

1.  A process for producing a modified propylene polymer, comprising:

    subjecting a propylene homopolymer satisfying the following

      (a) to (h) to the following modification (2) using a radical initiator and the following organic acid (1):
      (a) a meso pentad fraction [mmmm] is 40 to 50 mol%,
      (b) a racemic pentad fraction [rrrr] and [1-mmmm] satisfy a relationship represented by the following formula:

$$[rrrr]/[1-mmmm] \leq 0.05,$$

      (c) a racemic meso racemic meso pentad fraction [rmrm] is 2.5 mol% or more,
      (d) a meso triad fraction [mm], a racemic triad fraction [rr], and a triad fraction [mr] satisfy a relationship represented by the following formula:

$$mm \times rr/(mr)^2 \leq 2.0,$$

      (e) a molecular weight distribution (Mw/Mn) measured by gel permeation chromatography (GPC) is 2.5 or lower,
      (f) a weight average molecular weight (Mw) measured by GPC is 50,000 to 200,000,
      (g) in a tetralin solvent, an intrinsic viscosity [η] measured at 135°C is 0.5 to 1.5 dL/g, and
      (h) a peak top [Melting point (Tm)] at the highest temperature measured, by a differential scanning calorimeter (DSC), from a melting endothermic curve obtained by holding a sample at 220°C for 3 minutes under a nitrogen atmosphere, rapidly cooling to 25°C, holding the resultant at 25°C for 50 minutes, and then increasing a temperature at a rate of 10°C/minute is 65 to 85°C, wherein

      (1) an organic acid is a mixture of an unsaturated carboxylic acid and/or its derivative (1-1) and a (meth) acrylic-acid compound (1-2) containing, in a proportion of 20 mass% or more, at least one compound selected from (meth)acrylates represented by General Formula (1):

$$CH_2 = CR_1COOR_2 \qquad (1)$$

      where $R_1$ represents H or $CH_3$; $R_2$ represents $C_nH_{2n+1}$; and n represents an integer of 8 to 18, and a mass ratio of (1-1) to (1-2) is 1:20 to 20:1, and
      (2) the modification is performed by adding a radical initiator and the organic acid to the propylene homopolymer which is melt by heating, and performing graft modification at 100 to 250°C.

2.  A modified propylene polymer satisfying the following (1) to (3) obtained by the production process according to claim 1:

      (i) a meso pentad fraction [mmmm] of a propylene chain portion is 40 to 50 mol%, and a meso triad fraction [mm], a racemic triad fraction [rr], and a triad fraction [mr] satisfy a relationship represented by the following formula:

$$mm \times rr/(mr)^2 \leq 2.0,$$

(j) a molecular weight distribution (Mw/Mn) measured by gel permeation chromatography (GPC) is 2.5 or lower, and a weight average molecular weight (Mw) measured by gel permeation chromatography (GPC) is 50,000 to 100,000, and
(k) apeaktop [Meltingpoint (Tm)] at the highest temperature measured, by a differential scanning calorimeter (DSC), from a melting endothermic curve obtained by holding a sample at 220 °C for 3 minutes under a nitrogen atmosphere, rapidly cooling to 25°C, holding the resultant at 25°C for 50 minutes, and then increasing the temperature at a rate of 10°C/minute is 65 to 85°C.

3. A modified polyolefin polymer composition, comprising:

   the modified propylene polymer according to claim 2; and
   an organic solvent.

4. A modified polyolefin polymer composition, comprising:

   the modified propylene polymer according to claim 2; and
   water.

5. A surface treatment agent for polyolefin resin, comprising the modified propylene polymer according to claim 2.

6. A primer, comprising the modified propylene polymer according to claim 2.

<div align="center">

**INTERNATIONAL SEARCH REPORT**

</div>

| | International application No. |
|---|---|
| | PCT/JP2007/050794 |

| A. CLASSIFICATION OF SUBJECT MATTER |
|---|
| *C08F255/02*(2006.01)i, *C08F8/46*(2006.01)i, *C08F110/06*(2006.01)i, *C08L51/06* (2006.01)i, *C09D5/00*(2006.01)i, *C09D151/06*(2006.01)i |

According to International Patent Classification (IPC) or to both national classification and IPC

| B. FIELDS SEARCHED |
|---|
| Minimum documentation searched (classification system followed by classification symbols) |
| C08F255/02, C08F8/46, C08F110/06, C08L51/06, C09D5/00, C09D151/06 |

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | WO 2003/087172 A1 (Idemitsu Petrochemical Co., Ltd.), 23 October, 2003 (23.10.03), Claims; page 16, lines 4 to 16 & EP 1498434 A1 & US 2005/171295 A1 | 1-6 |
| Y | JP 2002-173514 A (Nippon Paper Industries Co., Ltd.), 21 June, 2002 (21.06.02), Claims; table 4 & WO 2002/26846 A1 & EP 1321481 A1 & US 2004/059064 A1 | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 April, 2007 (10.04.07) | 17 April, 2007 (17.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/050794

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-201322 A (Mitsubishi Chemical Corp.), 18 July, 2003 (18.07.03), Claims; Par. Nos. [0052] to [0056] & EP 1308470 A2 & US 2003/153686 A1 & US 2005/075441 A1 | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 364745 A
- JP 48008856 A
- JP 46000737 A
- JP 3197510 A
- WO 03087172 A

- JP 2003201322 A
- JP 3615103 B
- JP 2002173514 A
- JP 2769958 B

**Non-patent literature cited in the description**

- **GRASSI et al.** *Macromolecules,* 1988, vol. 21, 617
- **BUSICO et al.** *Macromolecules,* 1994, vol. 27, 7538

- **JUNGLING et al.** *J. Polym. Sci.: Part A: Polym. Chem.,* 1995, vol. 33, 1305